# EUROPEAN PATENT APPLICATION

(11) **EP 2 469 966 A1**
(43) Date of publication of application: **27.06.2012**
(21) Application number: 10818291.6
(22) Date of filing: 24.05.2010
(51) Int. Cl.: H04W 88/08

(54) **METHOD, DEVICE AND SYSTEM FOR ESTABLISHING CHANNEL FOR WIRELESS SIGNAL TRANSMISSION**

(30) Priority: 23.09.2009 CN 200910190707
(71) Applicant: Huawei Technologies Co., Ltd., Guangdong 518129 (CN)
(72) Inventor: OUYANG, Weilong, Shenzhen Guangdong 518129 (CN); ZHOU, Jun, Shenzhen Guangdong 518129 (CN)
(74) Representative: Thun, Clemens
(86) International application number: PCT/CN2010/073120
(87) International publication number: WO 2011/035597

(57) **Abstract**

A method, an apparatus, and a system for establishing a path for transmitting a wireless signal are disclosed. The path involves a wired medium that connects an access device and a distributed node, and the method includes: the access device obtains communication performance parameters of the distributed node; the access device determines frequency used to transmit a wireless signal through the wired medium according to the communication performance parameters and a workable spectrum of the access device; and the access device adjusts parameters of the access device according to the determined frequency, and sends a message that carries the frequency to the distributed node so that the distributed node adjusts parameters of the distributed node according to the frequency to establish a path for transmitting a wireless signal in the wired medium. The method, the apparatus and the system disclosed herein transmit a wireless signal through a wired medium, and configure parameters of the modem automatically, so as to establish a tunneling transmission path automatically, improve the wall-penetrating capability of the wireless signal and improve the coverage of the wireless signal.

## Description

This application claims priority to Chinese Patent Application No. 200910190707.2, filed with the Chinese Patent Office on September 23, 2009 and entitled "METHOD, APPARATUS AND SYSTEM FOR ESTABLISHING PATH FOR TRANSMITTING WIRELESS SIGNAL", which is hereby incorporated by reference in its entirety.

### FIELD OF THE INVENTION

The present invention relates to communications technologies, and in particular, to a method, an apparatus, and a system for establishing a path for establishing a path for transmitting a wireless signal.

### BACKGROUND OF THE INVENTION

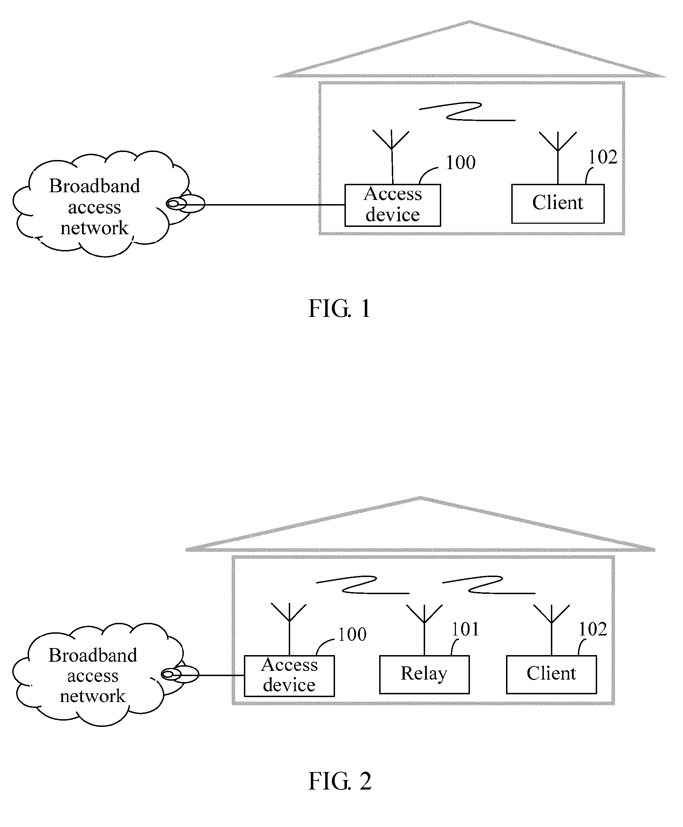

802.11-based Wireless Fidelity (WiFi) has been applied widely to home networks, and provides high-speed wireless access for users. The WiFi function is integrated in portable computers, home gateways, mobile phones, and so on. FIG. 1 shows architecture of a home wireless network. The access device 100 is a master device of wireless access, and communicates with a broadband access network to enable access to the Internet. The client 102 is a slave device of wireless access, and is connected to the access device 100 so as to get connected to the Internet through the access device 100.

The wireless access makes the user free from network cables, and enables the user to access the network anywhere in the wireless coverage. However, wireless channels are vulnerable to obstacles such as walls, and the obstacles deteriorate performance drastically. Moreover, the home environment varies sharply with the user, and the house structure, the area to be covered, and the wall structure are diversified. Therefore, the access device of one specification can hardly cater for all home users. To let the WiFi transmission be more capable of penetrating walls and cover wider areas, one method is to increase the transmitting power directly, which involves more antennas and more costs. Moreover, electromagnetic waves are harmful to people, and the increase of transmitting power means more harm to the health of the user. The other method is to apply a relay. As shown in FIG. 2, after receiving a wireless signal from the access device 100, the relay 101 boosts the signal locally and then transmits it. In this way, the wireless signal received by the client 102 do not attenuate too much, and the great attenuation caused by obstacles, too wide coverage area, or irregular home environment is avoided. However, the relay is capable of boosting the received signal, but not improving the received signal. Consequently, the noise introduced into the wireless channel is also boosted. Therefore, the relay increases the coverage area of a wireless signal, but does not enhance transmission performance of the WiFi.

### SUMMARY OF THE INVENTION

The embodiments of the present invention provide a method, an apparatus and a system for establishing a path for transmitting a wireless signal.

An embodiment of the present invention provides a method for establishing a path for transmitting a wireless signal. The path involves a wired medium that connects an access device with a distributed node, and the method includes:
by the access device, obtaining communication performance parameters of the distributed node;
determining frequency used to transmit a wireless signal through the wired medium according to the communication performance parameters and a workable spectrum of the access device; and
adjusting parameters of the access device according to the determined frequency, and sending a message that carries a frequency parameter to the distributed node so that the distributed node adjusts parameters of the distributed node according to the frequency parameter to establish a path for transmitting a wireless signal in the a wired medium.

An embodiment of the present invention provides an access device provided, which includes:
a modem, configured to exchange information with a distributed node through a wired medium and process the information through the wired medium; and
a node management unit, configured to: obtain communication performance parameters of the distributed node through the modem, determine frequency used to transmit a wireless signal between the modem and the distributed node according to the communication performance parameters and a workable spectrum of the modem, adjust parameters of the modem according to the frequency, and send a message that carries a frequency parameter to the distributed node through the modem.

An embodiment of the present invention provides a wireless network communication system, which includes an access device and a distributed node which is connected to the access device through a wired medium.

The access device is configured to: obtain communication performance parameters of the distributed node, determine frequency used to transmit a wireless signal through the wired medium according to the communication performance parameters and a workable spectrum of the access device, adjust parameters of the access device according to the frequency, and send a message that carries a frequency parameter to the distributed node; and

The distributed node is configured to adjust the parameters of the distributed node according to the frequency.

The method, the apparatus and the method disclosed herein use a wired medium to convert the wireless signal, and transmit the signal to the remote distributed node; a tunneling transmission path is established between the access device and the distributed node automatically; the distributed node converts the signal that comes from the tunneling transmission path into the original frequency, and transmits the signal. Because the tunneling transmission path is bidirectional, the wireless signal of the distributed node can also be transmitted to the access device through the tunneling transmission path. In this way, attenuation of the wireless channel is avoided, the transmission performance of the wireless signal is improved, the capability to penetrate walls of the wireless signal such as a WiFi signal is improved without involving modification of the wireless air interface protocol or increase of the transmitting power, and therefore wireless blind areas are eliminated.

### BRIEF DESCRIPTION OF THE DRAWINGS

To illustrate the technical solution of the present invention or the prior art more clearly, the following outlines the accompanying drawings involved in description of the embodiments of the present invention or the prior art. Apparently, the accompanying drawings outlined below are illustrative rather than exhaustive, and persons skilled in the art can derive other drawings from them without any creative effort.
FIG. 1 is a schematic diagram of architecture of a wireless network in the prior art;
FIG. 2 is a schematic diagram of network architecture free from wireless blind areas in the prior art;
FIG. 3 is a schematic diagram of spectrum resources of a wired medium;
FIG. 4 is a schematic diagram of architecture of a wireless network according to an embodiment of the present invention;
FIG. 5 is a flowchart of a method according to a first embodiment of the present invention;
FIG. 6 is a schematic diagram of an up-conversion process and a down-conversion process according to an embodiment of the present invention;
FIG. 7 is a schematic diagram of band planning of a wired medium according to an embodiment of the present invention;
FIG. 8 is a schematic diagram of network architecture with a gateway device independent of an access device according to an embodiment of the present invention;
FIG. 9 is a schematic diagram of a structure of an access device according to a second embodiment of the present invention;
FIG. 10 is a schematic diagram of a structure of a modem according to a second embodiment of the present invention;
FIG. 11 is a schematic diagram of a structure of a tunneling transmission unit according to a second embodiment of the present invention;
FIG. 12 is a schematic diagram of a structure of a distributed node according to a third embodiment of the present invention; and
FIG. 13 is a schematic diagram of architecture of a communication system according to an embodiment of the present invention.

### DETAILED DESCRIPTION OF THE EMBODIMENTS

The following describes the technical solutions of the present invention clearly and completely with the accompany drawings in the embodiments of the present invention. Evidently, the embodiments that are described are only part of, but not all of the embodiments of the present invention. All other embodiments, which can be derived by those skilled in the art from the embodiments provided herein without any creative effort, shall fall within the protection scope of the present invention.

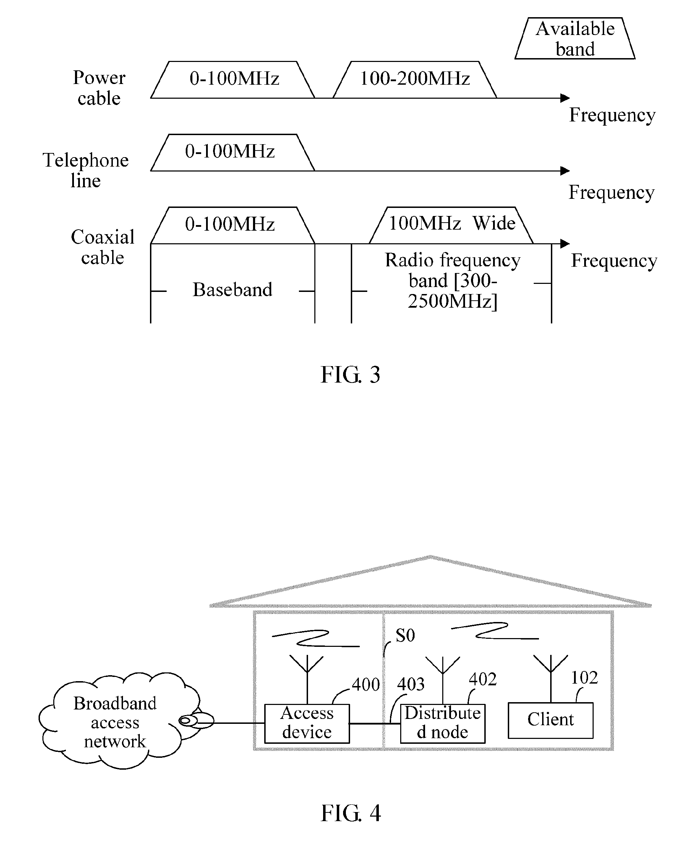

In the home wiring, a wired medium such as a power cable, a telephone line, a coaxial cable, and a plastic fiber has a similar topology structure, and has similar available spectrum resources, as shown in FIG. 3. Communication can be performed directly between any two ends on a power cable, telephone line, coaxial cable, or plastic fiber, and any end on such lines may serve as a server or client.

The wired medium such as a power cable, telephone line, coaxial cable, and plastic fiber can be laid out in any corner of a home, and can transmit a wireless signal to the far end without loss. That is, it has the function of tunneling transmission of a wireless signal. Due to such characteristics of a wired medium, the embodiments of the present invention use a wired medium to eliminate wireless blind areas. A wireless blind area refers to an area where a signal is very weak or even no signal exists in a wireless network. The following describes how to eliminate wireless blind areas through a wired medium, taking a power cable as an example of a wired medium. Other types of wired medium such as a telephone line, coaxial cable and plastic fiber has similar available spectrum resources, and works in the same way as a power cable.

As shown in FIG. 4, an access device 400 is connected to a broadband access network, and can communicate with a client 102 through an antenna. The client 102 also has an antenna for receiving and transmitting a wireless signal. However, due to existence of obstacles (such as a wall S0 in FIG. 4), the wireless signal transmitted from the antenna of the access device 400 are very weak or even disappear after penetrating the wall and entering the room where the client 102 locates. Consequently, the area where the client 102 locates becomes a blind area. To eliminate the blind area, a distributed node 402 is set in the room where the client 102 locates in an embodiment of the present invention, and a power cable 403 connects the access device 400 and the distributed node 402. The access device 400 transmits a wireless signal to the distributed node 402 through the power cable 403, and the distributed node 402 transmits a signal to the client 102 through an antenna, which eliminates wireless blind areas caused by obstacles.

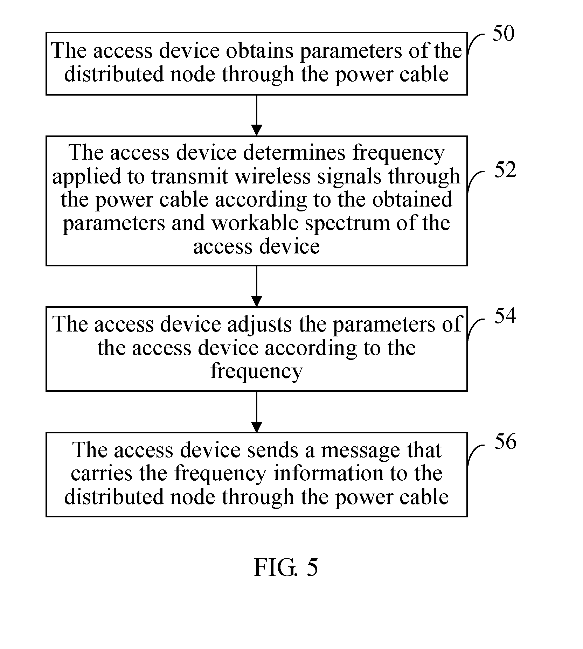

After the access device 400 and the distributed node 402 are connected through a power cable, it is necessary to establish a path for transmitting a wireless signal between the access device 400 and the distributed node 402, that is, establish a tunneling transmission path. The established tunneling transmission path can transmit a wireless signal without loss. As shown in FIG. 5, a method for establishing a path for transmitting a wireless signal in an embodiment of the present invention includes the following steps:
Step 50: The access device obtains parameters of the distributed node.

The parameters of the distributed node here are communication performance parameters of the distributed node, and include the type of the antenna of the distributed node 402, the working frequency of the antenna of the distributed node 402, the work mode of the modem of the distributed node 402, and the workable spectrum of the modem of the distributed node 402. The access device 400 may obtain the communication performance parameters of the distributed node 402 in the following way: The access device 400 sends a parameter request message to the distributed node 402 through a power cable, and the distributed node 402 sends a parameter response message that carries the communication performance parameters of the distributed node 402.

Alternatively, the access device 400 may also obtain the communication performance parameters of the distributed node 402 in the following way: The distributed node 402 sends a message that carries the communication performance parameters to the access device 400 through an antenna.

Step 52: The access device determines frequency used to transmit a wireless signal through the wired medium according to the communication performance parameters and the workable spectrum of the access device.

After determining that the parameters reported by the distributed node 402 meet a preset condition, the access device 400 may send a parameter acknowledgement message to the distributed node 402.

The preset condition may be an available working frequency set for the distribution 402 beforehand, a work mode of the modem of the distributed node 402, a workable spectrum of the modem of the distributed node 402, and so on.

The access device 400 determines the spectrum resources available for communication between the access device 400 and the distributed node 402 according to the working spectrum of the modem of the access device 400 and the working spectrum of the modem of the distributed node 402. Optionally, the access device 400 may also test a channel to know the spectrum resources actually available to the channel. If a channel test needs to be conducted, the access device 400 notifies the distributed node 402 to synchronously initiate the channel test by sending a channel test request to the distributed node 402. The distributed node 402 adjusts the parameters of a channel estimating module according to preset parameters, and sends a channel test acknowledgement message to the access device 400. After receiving the channel test acknowledgement message, the access device 400 adjusts the parameters of the channel estimating module of the access device 400, and the accessing device 400 and the distributed node 402 start the channel test at the same time. The method of the channel test is well-known in the art.

Step 54: The access device adjusts the parameters of the access device according to the spectrum resources.

The access device 400 obtains the spectrum suitable for communication with the distributed node 402 on the power cable according to the parameters reported by the distributed node 402 or a result of the channel test. Assume that the available spectrum is 0-50 MHz. The access device 400 reallocates the spectrum resources according to a preset rule. The preset rule may be: The distributed node prefers a lower spectrum. For example, the access device 400 may allocate a spectrum bandwidth of 0-20 MHz for transmitting a wireless signal, and allocate a spectrum bandwidth of 20-50 MHz for transmitting a broadband signal.

After reallocating the spectrum resources, the access device 400 configures parameters of the modem. For example, the access device 400 sets the spectrum of the communication module in the modem to 20-50 MHz, sets the working mode of the router in the modem as "dual-transmitter dual-receiver", sets the down-convert frequency of the inverter in the modem to 0-20 MHz, and sets the up-convert frequency in the modem to 2.4 GHz.

Step 56: The access device sends a message that carries information about the spectrum resources to the distributed node so that the distributed node adjusts parameters of the distributed node according to the frequency to establish, in the wired medium, a path for transmitting a wireless signal.

After completion of configuring the parameters of the modem, the access device 400 sends a parameter configuration request message to the access device 400. After receiving the parameter configuration request message, the distributed node 402 configures the parameters of the modem of the distributed node 402, where the configured content is the same as that of the access device 400.

After the configuration succeeds, the distributed node 402 sends a parameter configuration acknowledgement message to the access device 400. If the configuration fails, the distributed node 402 sends a parameter configuration acknowledgement message that carries error information to the access device 400.

Before the tunneling transmission path is established, the following processes of startup of the access device, pre-registration of the distributed node, and registration of the distributed node) are included, which are described as follows:

### (1) Startup of the access device 400

After the access device 400 is powered on, the access device exchanges information with the client 102 through an antenna, and periodically detects whether any distributed node is connected on the power cable. The detection way may be: The access device sends a discovery message to the power cable periodically. In the point-to-pultipoint network topology, a master node can send a message to a slave node at any time, but the slave node sends messages in only the time slice allocated by the master node. Therefore, the discovery message sent by the access device 400 carries time slice information.

### (2) Pre-registration of the distributed node 402

When the client 102 indicates a weak signal or no signal, the distributed node 402 may be powered on. The distributed node 402 and the client 102 are in the same room. After being powered on, the distributed node 402 enters a pre-registration state.

The distributed node 402 detects parameters of the hardware such as an antenna and a modem. The parameters include the workable spectrum of the modem and the receiving power and transmitting power of the antenna. The distributed node 402 may also detect whether the hardware is ready for working. If that the hardware is abnormal is detected, an alarm procedure is started and a hardware error is displayed.

After confirming that the hardware is normal, the distributed node 402 detects whether any communication signal exists on the power cable. If any communication signal exists on the power cable, the distributed node sets the parameters of the modem, for example, sets the state of the router to disconnected and the state of the inverter to off. After completion of the setting, the distributed node 402 waits for the discovery message of the access device 400.

### (3) Registration of the distributed node 402

The distributed node 402 enters the registration state after receiving a discovery message from the access device 400.

The distributed node 402 synchronizes communication signals according to the discovery message. The synchronization process is well-known for the persons skilled in the art in the art. The distributed node 402 sends a registration request message in the time slice allocated by the access device 400. The registration request message carries identification information of the distributed node 402. The identification information includes the media access control address of the distributed node 402 (such as Ethernet media access control address or hardware identifier of the distributed node 402), the type of the distributed node 402, and the serial number of the distributed node 402.

After receiving the registration request message from the distributed node 402, the access device 400 determines that the distributed node 402 is allowed registration according to the identification information in the registration request message and preset condition, and then allocates a slave node ID to the distributed node 402 and sends a registration response message that carries the slave node ID to the distributed node 402. If registration conditions are fulfilled, the access device sends a registration response message that carries error information to the distributed node 402 so that the distributed node 402 makes adjustment according to the error information.

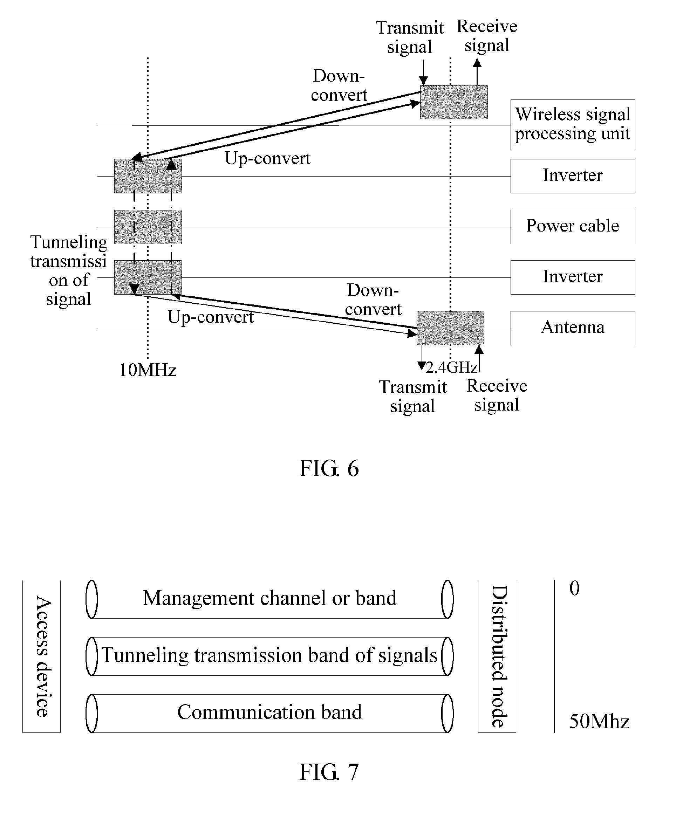

The WiFi network has two antennas. One is an inherent antenna of the access device 400, and the other is an antenna of the distributed node 402 and is extended to the far end through a power cable by means of spectrum shifting. In this way, a wireless signal can penetrate walls, and wireless blind areas in the room are eliminated. FIG. 6 shows spectrum shifting of the wireless signal received and transmitted by the access device 400.

To support access of multiple distributed nodes, the access device needs to broadcast spectrum allocation information periodically on a fixed channel or at fixed frequency. Therefore, a fixed channel or band may be set in the spectrum of the power cable to broadcast spectrum allocation information periodically, as shown in FIG. 7. Because a distributed node has joined the network and begins the tunneling transmission of the wireless signal, after the spectrum changes, the access device needs to periodically broadcast new spectrum allocation information to a distributed node which is newly powered on. Therefore, the distributed node newly powered on knows the communication band and starts the synchronization process of the communication signals.

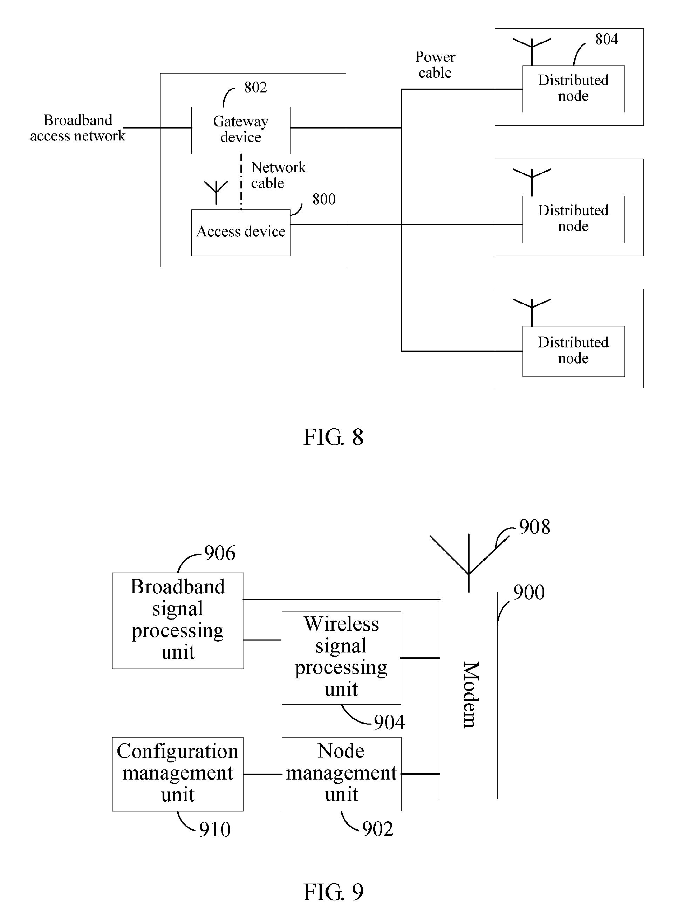

The access device described above has the functions of a gateway. If the access device is independent of a gateway device, as shown in FIG. 8, It is assumed that the distributed node 804 is powered on. The access device 800, serving as a master device of the distributed node 804, controls and manages the distributed node 804. Meanwhile, the access device serves as a slave device of the gateway device 802. In this case, both the access device 800 and the distributed node 804 need to be registered with the gateway device 802 through the power cable. The registration process is similar to the process of registering the distributed node with the access device when the access device provides gateway functions. After the access device 800 and the distributed node 804 are registered with the gateway device 802, the gateway device 802 identifies the access device and the distributed node according to the terminal type in the registration request message, and sends a parameter configuration request message to the access device 800. The parameter configuration request message carries a communication address of the distributed node 804 and a communication address of the access device 800. The communication addresses may be the media access control address of the distributed node 804 and the media access control address of the access device 800.

The access device 800 establishes a tunneling transmission path to the distributed node 804 according to the communication address of the distributed node 804. The process of establishing the tunneling transmission path is similar to the establishment process described above except that: When a channel test needs to be conducted, the gateway device 802 sends a channel test request message to the access device 800 to authorize the access device 800 to start the channel test. The access device 800 starts the channel test. Upon completion of the test, the access device 800 sends a channel test acknowledgement message to the gateway device 802. The channel test acknowledgement message carries information about spectrum resources available to the channel between the access device 800 and the distributed node and information about spectrum resources for tunneling transmission of a signal. The gateway device 802 judges whether the spectrum resources meet requirements according to the preset information. If the spectrum resources meet requirements, the gateway device 802 broadcasts a parameter configuration request message onto the power cable. The slave nodes (including the access device and the distributed node) on the power cable reconfigure the parameters of the modem after receiving the configuration request message.

The method for establishing a tunneling transmission path in this embodiment uses a wired medium to convert the wireless signal, and transmit the signal to the remote distributed node; a tunneling transmission path is established between the access device and the distributed node automatically; the distributed node converts the signal that comes from the tunneling transmission path into the original frequency, and transmits the signal. Because the tunneling transmission path is bidirectional, the wireless signal of the distributed node can also be transmitted to the access device through the tunneling transmission path. In this way, attenuation of the wireless channel is avoided, the transmission performance of the wireless signal is improved, the capability to penetrate walls of the wireless signal such as a WiFi signal is improved without involving modification of the wireless air interface protocol or increase of the transmitting power, and therefore wireless blind areas are eliminated.

An access device in a wireless network is provided in a second embodiment of the present invention. As shown in FIG. 9, the access device includes a modem 900 and a node management unit 902. Persons skilled in the art understand that the access device in the wireless network may further include a broadband signal processing unit 906, a wireless signal processing unit 904, a configuration management unit 910, and an antenna 908. The antenna 908 is connected to the wireless signal processing unit 904 through a modem 900.

The modem 900 is configured to receive messages from the distributed node through a wired medium, and send messages to the distributed node through a wired medium, where the wired medium may be a power cable, a telephone line, a coaxial cable, or a plastic fiber. The following description takes the power cable as an example.

The broadband processing unit 906 is configured to process a broadband signal, including receiving and sending of Ethernet messages and IP messages, processing of Ethernet messages and IP messages, and address translation.

The antenna 908 is configured to receive and transmit a wireless signal.

The wireless signal processing unit 904 is configured to process the wireless signal received by the antenna 908.

The configuration management unit 910 is configured to configure the parameters of the node management unit 902 and the modem 900.

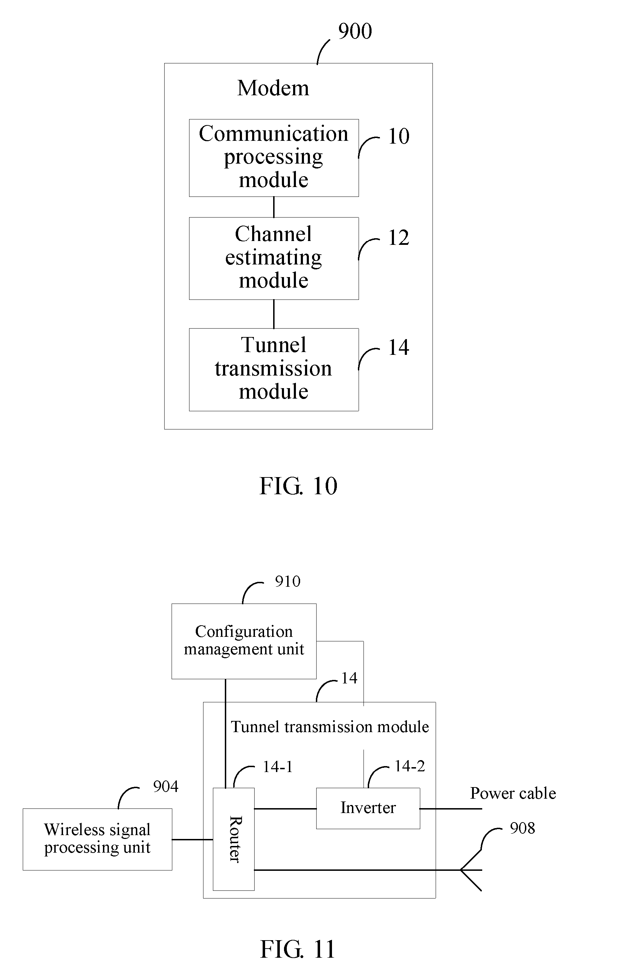

The modem 900 is further configured to process the broadband signal and wireless signal. FIG. 10 shows a structure of the modem 900, which includes a communication processing module 10 and a tunneling transmission module 14.

The tunneling transmission module 14 is configured to: exchange a signal with the distributed node through the power cable and process the signal through the power cable. Specifically, the tunneling transmission module performs down-conversion on the wireless signal that comes from the wireless signal processing unit 904, transmits, through the power cable, the processed wireless signal to the distributed node through tunneling transmission, performs up-conversion on that wireless signal that comes from the power cable, transmits the processed wireless signal to the wireless signal processing unit 904, performs transparent transmission on the broadband signal that comes from the communication processing module 10, and so on.

FIG. 11 shows a structure of the tunneling transmission module 14. The components in the tunneling transmission module 14 are described below:

The router 14-1 is configured to connect to the inverter 14-2 and/or the antenna 908. If no distributed node is powered on, the configuration management unit 910 controls the router 14-1 to connect to the antenna and to disconnect from the inverter 14-2. In this way, the router 14-1 performs transparent transmission on the wireless signal that comes from the wireless signal processing unit 904 to the antenna 908, and performs transparent transmission on the wireless signal of the antenna 908 to the wireless signal processing unit 904. When a distributed node is powered on, the configuration management unit 910 controls the router 14-1 to connect to the inverter 14-2 and the antenna 908. At this time, the router 14-1 not only performs transparent transmission on the wireless signal of the wireless signal processing unit 904 to the antenna 908 and performs transparent transmission on the wireless signal of the antenna 908 to the wireless signal processing unit 904, but also transmits the wireless signal of the wireless signal processing unit 904 to the power cable through the inverter 14-2 and transmits the wireless signal on the power cable to the wireless signal processing unit 904 through the inverter 14-2.

The inverter 14-2 is configured to perform down-conversion on the wireless signal that comes from the wireless signal processing unit 904 according to the parameters configured by the configuration management unit 910 and transmit the signal to the power cable; and perform up-conversion on the wireless signal that comes from the power cable according to the parameters configured by the configuration management unit 910 and transmit the signal to the wireless signal processing unit 904.

The communication processing module 10 is connected to the broadband signal processing unit 906, serves as a communication interface of a local area network such as Ethernet to bear broadband services, and exchange a broadband signal with the distributed node through the tunneling transmission module 14.

The modem 900 further includes a channel estimating module 12, which is configured to perform channel test for the power cable to obtain the actual spectrum resources on the power cable. The method of the channel test is well-known in the art.

The node management unit 902 is configured to: send a parameter request message to the distributed node through the modem 900, receive a parameter response message from the distributed node through the modem 900, determine the spectrum available to communication between the modem 900 and the distributed node according to the parameter response message, and send a parameter configuration request message that carries the spectrum to the distributed node through the modem 900.

The node management unit 902 is further configured to judge whether the distributed node is allowed access according to the conditions set by the configuration management unit 910 after the parameter response message is received. If the distributed node is allowed access, the node management unit 902 configures the parameters of the communication processing module 10 and the tunneling transmission module 14 in the modem 900. For example, if the spectrum actually available on the power cable is 0-50 MHz, the node management unit 902 may set the spectrum of the communication processing module 10 to 20-50 MHz to transmit a broadband signal, set the working mode of the router 14-1 to "dual receiver and dual transmitter", set the up-convert frequency of the inverter 14-2 to 2.4 GHz, and set the down-convert frequency of the inverter 14-2 to 0-20 MHz, and so on.

The access device provided in this embodiment transmits a wireless signal through a wired medium by means of tunneling transmission while transmitting a broadband signal, and transmits the wireless signal to the remote distributed node through a wired medium, which improves the wall-penetrating capability of the wireless signal and eliminates blind areas; and the access device can allocate spectrum resources automatically to establish a tunneling transmission path to the distributed node.

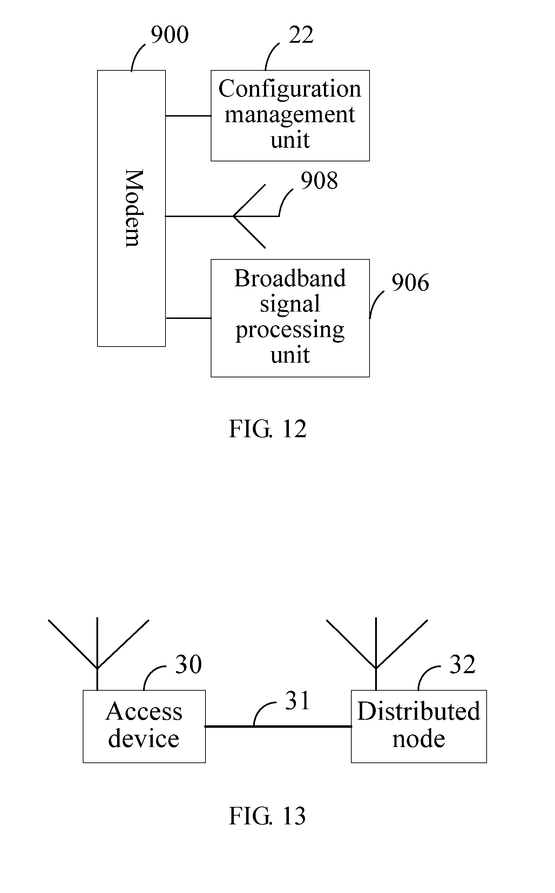

A distributed node is provided in a third embodiment of the present invention. The distributed node may be connected to the access device through a wired medium. As shown in FIG. 12, the distributed node includes a modem 900, a configuration management unit 22, an antenna 908, and a broadband signal processing unit 906. The modem 900, the antenna 908, and the broadband signal processing unit 906 have been described above.

The configuration management unit 22 is configured to: obtain parameters of the hardware of the distributed node after the distributed node is powered on, where the parameters include the type of the antenna 908, the workable frequency range of the modem 900, and the rated transmitting power and receiving power of the antenna 908; and start an alarm procedure if failure of the hardware is detected after the parameters of the hardware are obtained.

The configuration management unit 22 is further configured to: detect whether any communication signal exists on the power cable; and, if so, set the parameters of the modem, for example, set the state of the router to "disconnected" and the state of the inverter to "off"; wait for the discovery message of the access device after completion of the setting; and be registered with the access device through the modem 900 after the discovery message is received. The registration process has been described in the first embodiment.

The configuration management unit 22 is further configured to: receive a parameter request message from the access device and send a parameter response message to the access device. The parameters carried in the parameter response message have been described above.

The configuration management unit 22 may send a message that carries communication performance parameters to the access device through the antenna 908.

The configuration management unit 22 is further configured to set parameters of the modem after receiving the parameter configuration request message from the access device, for example, set the spectrum available to the communication processing module of the modem 900 according to the spectrum carried in the parameter configuration request message, set the working mode of the router in the modem 900, and set the up-convert frequency and the down-convert frequency of the inverter in the modem 900.

The distributed node in this embodiment transmits a wireless signal through a wired medium, and configures parameters of the modem automatically, so as to establish a tunneling transmission path to the access device automatically. The wireless signal of the access device can be transmitted for a farther distance through the tunneling transmission path, which improves the wall-penetrating capability of the wireless signal and improves the coverage of the wireless signal.

A wireless network communication system is provided in the fourth embodiment of the present invention. As shown in FIG. 13, the system includes an access device 30 and a distributed node 32. The access device 30 is connected to the distributed node 32 through a wired medium 31. The wired medium 31 may be a power cable, a telephone line, a coaxial cable, or a plastic fiber. This embodiment takes the power cable as an example.

The access device 30 is configured to: send a parameter request message to the distributed node 32 through the power cable 31; determine the spectrum resources available for communication with the distributed node 32 through the wired medium 31 according to a parameter response message from the distributed node 32 after receiving the parameter response message; set parameters of the access device 30 according to the spectrum resources, and send a parameter configuration request message that carries information about the spectrum resources to the distributed node 32.

The access device 30 is further configured to: send a discovery message that carries information about a time slice to the distributed node 32 through the power cable 31; receive a registration request message sent by the distributed node 32 in the time slice through the power cable 31, where the registration request message carries identification information of the distributed node 32; if the identification information meets a preset condition, allocate a slave node ID to the distributed node 32, send a registration response message that carries the slave node ID to the distributed node 32, and establish a mapping relationship between the identification information and the slave node ID. Afterward, the access device 30 communicates with the distributed node 32 according to the slave node ID.

The distributed node 32 is configured to set the parameters of the distributed node according to the spectrum resources in the parameter request configuration message.

The communication system provided in this embodiment extends the wireless signal to the set distributed node, and transmits the signal through the antenna of the distributed node. In this process, the wireless signal can be transmitted without loss, which improves transmission performance of the wireless signal and wall-penetrating capability of the wireless signal, and eliminates blind areas.

Persons skilled in the art understand that all or part of the steps of the method in the embodiments of the present invention may be implemented by a program instructing relevant hardware. The program may be stored in computer readable storage media such as ROM/RAM, magnetic disk or CD-ROM.

The above descriptions are merely exemplary embodiments of the present invention, but not intended to limit the scope of the present invention. Any modifications, variations or replacement that can be easily derived by those skilled in the art should fall within the scope of the present invention. Therefore, the protection scope of the present invention is subject to the appended claims.

## Claims

1. A method for establishing a path for transmitting a wireless signal, wherein: the path involves a wired medium that connects an access device with a distributed node, and the method comprises:
obtaining, by the access device, communication performance parameters of the distributed node;
determining, by the access device, frequency used to transmit a wireless signal through the wired medium according to the communication performance parameters and a workable spectrum of the access device; and
adjusting, by the access device, parameters of the access device according to the determined frequency, and sending a message that carries a frequency parameter to the distributed node so that the distributed node adjusts parameters of the distributed node according to the frequency parameter to establish a path for transmitting a wireless signal in the wired medium.

2. The method according to claim 1, wherein:
before the obtaining, by the access device, the parameters of the distributed node through the wired medium, the method further comprises:
sending, by the access device, a discovery message that carries information about a time slice to the distributed node through the wired medium;
receiving through the wired medium, by the access device, a registration request message sent by the distributed node in the time slice, wherein the registration request message carries identification information of the distributed node;
judging, by the access device, whether the identification information meets a preset condition; and, if so, allocating a slave node identifier (ID) to the distribution node, and sending a registration response message that carries the slave node ID to the distributed node; and
establishing, by the access device, a mapping relationship between the identification information and the slave node ID.

3. The method according to claim 2, wherein:
the identification information comprises at least one of: a media access control address of the distributed node, or the type of the distributed node, and a serial number of the distributed node.

4. The method according to claim 1, wherein:
the communication performance parameters comprise: the type of an antenna of the distributed node, a work mode of a modem of the distributed node, and a spectrum of the modem of the distributed node.

5. The method according to claim 1, wherein:
before the determining, by the access device, the frequency used to transmit the wireless signal through the wired medium according to the communication performance parameters and the workable spectrum of the access device, the method further comprises:
sending, by the access device, a channel test request message to the distributed node; and
starting, by the access device, a channel test according to preset parameters after receiving a channel test response message from the distributed node.

6. The method according to claim 1, wherein:
the adjusting, by the access device, the parameters of the access device according to the frequency comprises:
adjusting, by the access device, parameters of a modem of the access device according to the frequency, and specifically, adjusting frequency for performing broadband communication between the modem and the distributed node, adjusting frequency for performing tunneling transmission of a wireless signal between the modem and the distributed node, and so on.

7. The method according to any one of claims 1-6, wherein:
the wired medium is a power cable, a telephone line, a coaxial cable, or a plastic fiber.

8. An access device, comprising:
a modem, configured to exchange information with a distributed node through a wired medium and process the information through the wired medium; and
a node management unit, configured to: obtain communication performance parameters of the distributed node through the modem, determine frequency used to transmit a wireless signal between the modem and the distributed node according to the communication performance parameters and a workable spectrum of the modem, adjust parameters of the modem according to the frequency, and send a message that carries a frequency parameter to the distributed node through the modem.

9. The access device according to claim 8, wherein the modem comprises:
a tunneling transmission module, configured to exchange a wireless signal with the distributed node through the wired medium, and process the signal through the wired medium; and
a communication processing module, configured to exchange a broadband signal with the distributed node through the wired medium, and process the signal through the wired medium.

10. A wireless communication system, comprising an access device and a distributed node which is connected to the access device through a wired medium, wherein:
the access device is configured to: obtain communication performance parameters of the distributed node, determine frequency used to transmit a wireless signal through the wired medium according to the communication performance parameters and a workable spectrum of the access device, adjust parameters of the access device according to the frequency, and send a message that carries a frequency parameter to the distributed node; and
the distributed node is configured to adjust the parameters of the distributed node according to the frequency.

11. The system according to claim 10, wherein:
the step of obtaining the communication performance parameters of the distributed node comprises:
by the access device, sending a parameter request message to the distributed node through the wired medium, and receive a parameter response message sent by the distributed node through the wired medium, wherein the parameter response message carries the communication performance parameters;
or
receiving a message that carries the communication performance parameters from the distributed node through an antenna.
